# EUROPÄISCHE PATENTSCHRIFT

(11) **EP 2 176 273 B1**
(45) Veröffentlichungstag und Bekanntmachung des Hinweises auf die Patenterteilung: **07.09.2011**
(21) Anmeldenummer: 08786518.4
(22) Anmeldetag: 28.07.2008
(51) Int. Cl.: C07F 7/18

(54) **VERFAHREN ZUR HERSTELLUNG VON AMINOORGANOSILANEN**
METHOD FOR PRODUCING AMINO-ORGANOSILANES
PROCÉDÉ DE FABRICATION D'AMINOORGANOSILANES

(30) Priorität: 07.08.2007 DE 102007037193
(43) Veröffentlichungstag der Anmeldung: 21.04.2010
(73) Patentinhaber: Wacker Chemie AG, 81737 München (DE)
(72) Erfinder: ZICHE, Wolfgang, 84489 Burghausen (DE); STANJEK, Volker, 84539 Ampfing (DE)
(74) Vertreter: Fritz, Helmut
(86) Internationale Anmeldenummer: PCT/EP2008/059877
(87) Internationale Veröffentlichungsnummer: WO 2009/019161

(56) Entgegenhaltungen:
- WO-A-03/068780
- WO-A-2005/047298
- VORONKOV M G ET AL: "A NOVEL SYNTHETIC ROUTE TO 1-AZA-2-SILACYCLOPENTANE DERIVATIVES" JOURNAL OF ORGANOMETALLIC CHEMISTRY, ELSEVIER-SEQUOIA S.A. LAUSANNE, CH, Bd. 406, Nr. 1 / 02, 26. März 1991 (1991-03-26), Seiten 87-89, XP000177919 ISSN: 0022-328X

## Beschreibung

Die Erfindung betrifft ein Verfahren zur Herstellung von Aminoorganosilanen, durch Umsetzung von Amin mit (Halogenorganyl)silanen.

Aus dem Stand der Technik sind verschiedene Verfahren zur Herstellung von Aminoorganosilanen bekannt. Die Herstellung aminofunktioneller Organosilane erfolgt vorwiegend durch Umsetzung von chlorfunktionellen Organosilanen mit organischen Aminen verschiedenster Art oder Ammoniak. Dabei verfährt man in der Regel so, dass mindestens 2 Mole Amin bzw. Ammoniak pro Mol chlorfunktionelles Organosilan eingesetzt werden, so dass neben der Bildung des aminofunktionellen Organosilans noch genügend aminische Komponente zur Überführung des substituierten Chlors in das entsprechende Aminhydrochlorid bzw. Ammoniumchlorid zur Verfügung steht.

Vorteilhaft ist hierbei vor allem die hohe Verfügbarkeit von (Chloralkyl)silanen, die mittels Photochlorierung von Alkylsilanen oder Hydrosilylierung von entsprechenden Halogensubstituierten Olefinen an Si-H-haltige Verbindungen erhältlich sind und beispielsweise als Zwischenprodukte für die Synthese einer Vielzahl von organofunktionellen Silanen Verwendung finden. Weiterhin kann bei diesem Verfahren neben Ammoniak auf eine große Zahl gut verfügbarer primärer und sekundärer Amine zum Aufbau der (N-Organylaminoorganyl)- und (N,N-Diorganylaminoorganyl)triorganylsilane zurückgegriffen werden, was einen sehr weiten Anwendungsbereich des Verfahrens und dadurch kostengünstige Produktwechsel auf bestehenden technischen Fertigungsanlagen ermöglicht.

WO2005047298 offenbart (die Verweise in Klammern beziehen sich auf dieses Dokument) bereits ein Verfahren zur Herstellung von Aminoorganyl - triorganylsilanen der allgemeinen Formel (1) durch Umsetzung von cyclischen oder acyclischen Aminen der allgemeinen Formel (2), mit (Halogenorganyl)silanen der allgemeinen Formel (3) wobei
R' einen Alkoxyrest mit jeweils 1 -10 C -Atomen,
R¹ einen Kohlenwasserstoffrest mit 1 -10 C -Atomen,
R² einen zweiwertigen Kohlenwasserstoffrest mit 1 -10 C -Atomen,
R³, R⁴ unabhängig voneinander Wasserstoff oder ein Kohlenwasserstoffreste mit 1 -10 C - Atomen, wobei R³ , R⁴ auch miteinander verbunden sein können, und der resultierende Cyclus auch noch weitere Heteroatome enthalten kann,
n eine Zahl gleich 1, 2 oder 3 und
X Chlor, Brom oder Iod bedeuten,
wobei die Umsetzung die folgenden Schritte umfasst (Siehe D1, Anspruch 1):
a) Umsetzung des (Halogenorganyl)silans der allgemeinen Formel (3) und des Amins der allgemeinen Formel (2) bei einer Temperatur von 80 bis 200°C, wobei neben dem Silan der allgemeinen Formel (1) als Nebenprodukt das Ammoniumhalogenid des Amins der allgemeinen Formel (2) gebildet wird,
b) Zugabe einer Base (NH₃), wobei es zu einer vollständigen oder partiellen Umsalzung kommt, bei der das Am in der allgemeinen Formel (2) wieder freigesetzt wird und sich Ammoniumhalogenid bildet (Anspruch 3b und 4f) und
c) Abtrennung des gebildeten Ammoniumsalzes (=Halogenid der Base (B)).

Das Ammoniumhalogenid des Amins der Base B fällt dabei typischerweise als unlöslicher Feststoff aus, der durch Abfiltrieren entfernt wird (Beispiele 2-10). Die Endreinigung des Produkts erfolgt durch Destillation.

VORONKOV M G ET AL: "A NOVEL SYNTHETIC ROUTE TO 1-AZA-2-SILACYCLOPENTANE DERIVATIVES" JOURNAL OF ORGANOMETALLIC CHEMISTRY, ELSEVIER-SEQUOIA S.A. LAUSANNE, CH, Bd. 406, Nr. 1 / 02, 26. März 1991 offenbart (die Verweise in Klammern beziehen sich auf dieses Dokument) die Herstellung der Verbindung IIIa-c (Seite 87) und "Experimental".

Aus GB 686,068 A sind (Amino)-, (N-Organylamino)-, und (N,N-Diorganylaminomethyl)- oder (N,N-Diorganylaminoethyl)-triorganylsilane bekannt. Weiterhin beschreibt GB 686,068 A ein Verfahren zur Umsetzung von entsprechenden (Chlormethyl)- oder (Brommethyl)triorganosilanen mit Ammoniak, einem primären oder sekundären Amin bei Temperaturen von mindestens 50°C zur Herstellung besagter (Aminoorganyl)-, (N-Organylaminoorganyl)- und (N,N-Diorganylaminoorganyl)triorganylsilane. Dabei werden in der Regel die (Chlormethyl)- oder (Brommethyl)triorganosilane in einem Kolben oder Autoklaven, abhängig von den Siedepunkten der eingesetzten Amin-Verbindungen, vorgelegt und auf Temperaturen über 100°C, vorzugsweise 110-130°C erwärmt. Im Falle höher siedender Amine (z. B. Cyclohexylamin) kann die Mischungsreihenfolge umgekehrt werden, d.h. die (Chlormethyl)- oder (Brommethyl)triorgano-silane werden zum erwärmten Amin geben.

Nach einem in DE 1812564 A1 beschriebenen Verfahren werden (Aminomethyl)silanderivate durch Umsetzung eines (Chlormethyl)- oder (Brommethyl)silanderivats mit Ammoniak oder einem primären Amin hergestellt. Die Umsetzung erfolgt bei Temperaturen von 80 oder 100°C in einem Zeitraum von 3 bzw. 2 Stunden, wobei das Amin im molaren Überschuss von 1:3,2 - 6 bereits zu Beginn der Reaktion vollständig vorgelegt wurde.

DE 10 2004 060 627 A beschreibt eine Variation dieser Verfahren, in der die o.g. Reaktionen kontinuierlich durchgeführt werden.

Aus dem Stand der Technik sind ferner Verfahren zur Reduktion von Halogenid-Gehalten in Alkoxysilanen bekannt, beispielsweise aus EP 0702017 A solche, die auf der Ausfällung gelöster Aminhydrochloridreste durch Zugabe von Alkali- oder Erdalkali-Alkoholat-Salzen beruhen. Ein alternatives Verfahren, das Reduktionen von Chlorid-Gehalten in Alkoxysilanen durch Einleiten von Ammoniak ermöglichen soll, ist in DE 19941283 A1 beschrieben.

Nachteilig bei all diesen Verfahren ist die Tatsache, dass dabei (gegebenenfalls organisch substituierte) Ammoniumhalogenide in quantitativen Mengen als Nebenprodukte gebildet werden und als Feststoffe abgetrennt werden müssen. Eine Abtrennung derartig großer Feststoffmengen ist zeit- und damit auch kostenaufwendig und erfordert zudem Produktionsanlagen, die über entsprechende Apparaturen, z.B. leistungsstarke und damit teure Zentrifugen, verfügen. Dies ist jedoch bei vielen Anlagen - insbesondere bei den meisten Vielzweckanlagen wie sie typischerweise zur Herstellung von Feinchemikalien verwendet werden - nicht der Fall.

Hier beschreibt beispielsweise US 6452033 A die Herstellung von Aminoethylaminoorganyl-triorganylsilanen durch die Umsetzung der entsprechenden chlorfunktionellen Organosilane mit Ethylendiamin, wobei die o.g. Phasentrennung zur Separation der Hydrochloride in verschiedener Weise zum Einsatz kommt. Nachteilig an diesem Verfahren ist jedoch die Tatsache, daß es sich auf Silane beschränkt, die über eine Etylendiamineinheit verfügen.

Aufgabe war die Entwicklung eines Verfahrens, das die Nachteile des Standes der Technik nicht mehr aufweist.

Gegenstand der Erfindung ist ein Verfahren zur Herstellung von Aminoorganyl-triorganylsilanen der allgemeinen Formel (1)

R'₃₋ₙR¹ₙSi-R²-NR³R⁴ (1),

durch Umsetzung von cyclischen oder acyclischen Aminen der allgemeinen Formel (2),

H-NR³R⁴ (2)

mit (Halogenorganyl)silanen der allgemeinen Formel (3)

R'₃₋ₙR¹ₙSi-R²-X (3),

wobei
- **R'**: einen Acyloxyrest oder einen Alkoxyrest mit jeweils 1-10 C- Atomen,
- **R¹**: einen Kohlenwasserstoffrest mit 1-10 C-Atomen,
- **R²**: einen zweiwertigen Kohlenwasserstoffrest mit 1-10 C-Atomen,
- **R³, R⁴**: unabhängig voneinander Wasserstoff oder ein Kohlenwasserstoffrest mit 1-10 C-Atomen, wobei **R³, R⁴** auch miteinander verbunden sein können, und der resultierende Cyclus auch noch weitere Heteroatome, NH-Gruppen oder N**R^{2a}-** Gruppen enthalten kann,
- **R^{2a}**: einen zweiwertigen Kohlenwasserstoffrest mit 1-10 C-Atomen,
- **n**: eine Zahl gleich 0, 1, 2 oder 3 und
- **X**: Chlor, Brom oder Iod bedeuten,
wobei die Umsetzung die folgenden Schritte umfasst:
a) Umsetzung des (Halogenorganyl)silans der allgemeinen Formel (3) und des Amins der allgemeinen Formel (2) bei einer Temperatur von 0 bis 250°C, wobei neben dem Silan der allgemeinen formel (1) als Nebenprodukt das Ammoniumhalogenid des Amins der allgemeinen Formel (2) gebildet wird,
b) Zugabe einer Base (B), wobei es zu einer vollständigen oder partiellen Umsalzung kommt, bei der das Amin der allgemeinen Formel (2) wieder freigesetzt wird und sich das Halogenid der Base (B) bildet, wobei das Halogenid der Base (B) bei Temperaturen von höchstens 200 °C flüssig ist und
c) Abtrennung des gebildeten flüssigen Halogenids der Base (B).

Das Ammoniumhalogenid des Amins der allgemeinen Formel (2) fällt dabei typischerweise als unlöslicher Feststoff aus, der sich im Schritt b) nach der Zugabe der Base (B) wieder auflöst, wobei sich eine separate flüssige Phase bildet, die im wesentlichen das Halogenid der Base (B) enthält und in Schritt c) dann abgetrennt wird.

Bezogen auf (Halogenorganyl)silan der allgemeinen Formel (3) wird das Amin der allgemeinen Formel (2) bevorzugt im Überschuss, d.h. in molaren Verhältnissen von 1,1 zu 1 bis 100 zu 1, bevorzugt von 1,5 zu 1 bis 50 zu 1, besonders bevorzugt von 2 zu 1 bis 20 zu 1, insbesondere von 3 zu 1 bis 10 zu 1 eingesetzt. Bezogen auf Silan der allgemeinen Formel (3) wird die Base (B) vorzugsweise in molaren Verhältnissen von 0,5 zu 1 bis 10 zu 1, bevorzugt von 0,7 zu 1 bis 5 zu 1, besonders bevorzugt von 0,8 zu 1 bis 2 zu 1, insbesondere von 0,9 zu 1 bis 1,0 zu 1 eingesetzt.

Die Kohlenwasserstoffreste **R¹, R², R^{2a}, R³, R⁴** können gesättigt oder ungesättigt, verzweigt oder unverzweigt, substituiert oder unsubstituiert sein.

Die Kohlenwasserstoffreste **R¹, R³, R⁴** können Alkylreste sein, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der alpha-- und der beta--Phenylethylrest; sowie durch Heteroatome wie N, O, S, P verknüpfte Kombinationen hiervon. Die Kohlenwasserstoffreste **R¹, R³, R⁴** weisen bevorzugt 1-6 insbesondere 1-3 C-Atome auf. Vorzugsweise ist **R¹** der Methyl-, Ethyl-, iso- und n-Propyl-, iso- und n-Butyl-, Pentyl-, Hexyl-, Heptyl-, Octyl-, Nonyl-, Decyl-, Phenyl-, Benzyl- oder AllylRest.

Die Reste **R³** und **R⁴** werden vorzugsweise aus den bevorzugten Resten von **R¹** sowie weiterhin aus Wasserstoff, Cylclohexyl- oder Phenylresten ausgewählt. Vorzugsweise ist maximal einer der Reste **R³** oder **R⁴** Wasserstoff. In einer besonders bevorzugten Ausführungsform ist der Rest **R³** ein Phenyl- oder Cyclohexylrest und der Rest **R⁴** Wasserstoff.

Weiterhin können die Reste **R³** und **R⁴** direkt oder durch Heteroatome verbunden sein, so dass sich unter struktureller Einbeziehung des N-Atoms zyklische Strukturen -NR³R⁴ ergeben. Vorzugsweise weisen die zyklischen Strukturen -NR³R⁴ 5 bis 10 Ringatome, insbesondere 5, 6 oder 8 Ringatome auf. Beispiele hierfür sind der Morpholino-, Piperidino- oder Pyrrolidinorest, die auch bevorzugt sind. Darüber hinaus ist der Rest -NR³R⁴ bevorzugt der N,N-Bis-(N',N'-dimethylaminopropyl)-Rest.

Der Rest **R'** hat vorzugsweise die Bedeutung von O**R¹**. Vorzugsweise ist **R'** ein Methoxy-, Ethoxy-, iso- und n-Propoxy-, Butoxy-, Phenoxy-, Benzyloxy- oder Allyloxyrest.

Bei den Resten **R²** und **R^{2a}** handelt es sich bevorzugt um einen zweiwertigen Kohlenwasserstoffrest mit 1-6 C-Atomen, insbesondere um eine Methylen-, Ethylen- und Propylen-Gruppe, besonders bevorzugt um die Methylen-Gruppe.

Der Rest **X** ist vorzugsweise Chlor oder Brom, insbesondere Chlor.

**n** weist bevorzugt den Wert 1, 2 oder 3 auf.

Ein weiterer Gegenstand der Erfindung ist ein Verfahren zur Herstellung von cyclischen Aminosilanen der allgemeinen Formel (4) 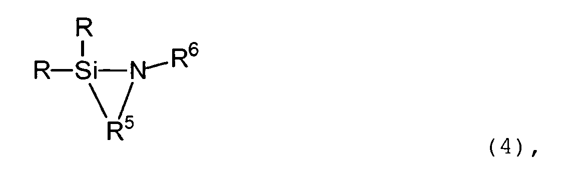 durch Umsetzung von Aminen der allgemeinen Formel (5),

H₂NR⁷ (5)

mit (Halogenorganyl)silanen der allgemeinen Formel (6)

(R₂)Y¹Si-R⁵-Y² (6),

wobei
- **R⁵**: einen zweiwertigen Kohlenwasserstoffrest mit 1-10 C-Atomen, bei dem die Kohlenwasserstoffkette durch Carbonylgruppen, Carboxylgruppen Sauerstoffatome, NH oder NR⁸-Gruppen unterbrochen sein kann,
- **R⁶**: Wasserstoff oder einen Kohlenwasserstoffrest mit 1-10 C- Atomen, der mit Halogenatomen, OH-Gruppen, und Gruppen -NH₂-, -NHR⁸, NR⁸₂ substituiert sein kann,
- **R⁷**: Wasserstoff oder einen Kohlenwasserstoffrest mit 1-10 C- Atomen, der mit Halogenatomen, OH-Gruppen, und Gruppen -NH₂, -NHR⁸, NR⁸₂ substituiert sein kann, **R** einen Kohlenwasserstoffrest, einen Acyloxyrest oder einen Alkoxyrest mit jeweils 1-10 C-Atomen,
- **R⁸**: einen Kohlenwasserstoffrest mit 1-10 C-Atomen, und
- **Y¹** und **Y²**: Chlor, Brom oder Iod bedeuten,
wobei die Umsetzung die folgenden Schritte umfasst:
a) Umsetzung des (Halogenorganyl)silans der allgemeinen Formel (6) und des Amins der allgemeinen Formel (5) bei einer Temperatur von 0 bis 300°C, wobei das Amin der allgemeinen Formel (5) mit einem 1,1- bis 1000-fachen Überschuss eingesetzt wird, und neben dem Silan der allgemeinen Formel (4) als Nebenprodukt das Ammoniumhalogenid des Amins der allgemeinen Formel (5) gebildet wird,
b) Zugabe einer Base (B), wobei es zu einer vollständigen oder partiellen Umsalzung kommt, bei der das Amin der allgemeinen Formel (5) wieder freigesetzt wird und sich das Halogenid der Base (B) bildet, wobei das Halogenid der Base (B) bei Temperaturen von höchstens 200 °C flüssig ist und
c) Abtrennung des gebildeten flüssigen Halogenids der Base (B).

Auch bei dieser Variante des erfindungsgemäßen Verfahrens fällt das Ammoniumchlorid des Amins der allgemeinen Formel (5) typischerweise als unlöslicher Feststoff aus, der sich im Schritt b) nach der Zugabe der Base (B) wieder auflöst, wobei sich eine separate flüssige Phase bildet, die im wesentlichen das Halogenid der Base (B) enthält und in Schritt c) dann abgetrennt wird.

**R⁵, R⁶** und **R⁷** können gesättigt oder ungesättigt, verzweigt oder unverzweigt, substituiert oder unsubstituiert sein.

Vorzugsweise ist **R⁵** eine Propylen- oder Butylengruppe.

**R⁶** ist vorzugsweise Wasserstoff oder ein cyclischer oder linearer Alkylrest mit 1-6 Kohlenstoffatomen oder ein 3-Aminopropylrest. **R⁷** steht vorzugsweise für Wasserstoff oder einen cyclischen oder linearen Alkylrest mit 1-6 Kohlenstoffatomen dar.

Die für **R'** und **R¹** angegebenen Beispiele und bevorzugten Reste sind auch Beispiele und bevorzugte Reste für **R**.

Die für **R¹** angegebenen Beispiele und bevorzugten Reste sind auch Beispiele und bevorzugte Reste für **R⁸**.

Die Reste **Y¹** und **Y²** sind vorzugsweise Chlor oder Brom, insbesondere Chlor.

In einer besonders bevorzugten Ausführungsform der Erfindung handelt es sich bei dem Aminosilan der allgemeinen Formel (5) um N-((3-Aminopropyl)-dimethylsilyl)-2,2-dimethyl-1-aza-2-silacyclopentan. In diesem Fall wird das Produkt in Schritt a) bevorzugt aus 2 Molekülen Chlorsilan mit **R⁵** gleich Propylen, **R** gleich Methyl und **Y¹** und **Y²** gleich Chlor und 2 Ammoniakmolekülen gebildet, wobei 4 Moleküle Ammoniumchlorid entstehen.

Bezogen auf das Silan der allgemeinen Formel (6) wird das Amin der allgemeinen Formel (5) bevorzugt im Überschuss, d.h. in molaren Verhältnissen von 1,2 zu 1 bis 1000 zu 1, bevorzugt von 1,6 zu 1 bis 100 zu 1, besonders bevorzugt von 2 zu 1 bis 10 zu 1, insbesondere von 3 zu 1 bis 6 zu 1 eingesetzt. Bezogen auf Silan der allgemeinen Formel (6) wird die Base (B) vorzugsweise in molaren Verhältnissen von 0,5 zu 1 bis 10 zu 1, bevorzugt von 0,7 zu 1 bis 5 zu 1, besonders bevorzugt von 0,8 zu 1 bis 2 zu 1, insbesondere von 0,9 zu 1 bis 1,0 zu 1 eingesetzt.

Prinzipiell können die Schritte a) und b) nacheinander oder auch gleichzeitig erfolgen. Ebenso denkbar ist eine zeitversetzte Durchführung, bei der mit Schritt b), d.h. der Zugabe des Oligoamins, zwar nach Beginn aber noch vor Beendigung von Schritt a) begonnen wird. Sofern bei den erfindungsgemäßen Verfahren eine Base (B) eingesetzt wird, das über freie NH- bzw. NH₂-Gruppen verfügt, erfolgt Schritt b) also die Zugabe des Oligoamins jedoch bevorzugt nach erfolgter Umsetzung in Schritt a). Bevorzugt werden Basen (B) eingesetzt, die beim Verfahrensschritt b) Salze bilden, die bereits bei Temperaturen < 150 °C besonders bevorzugt < 100 °C bzw. < 90 °C Flüssigkeiten bilden.

Schritt a) der erfindungsgemäßen Verfahren wird vorzugsweise bei Temperaturen von 50 bis 250°C durchgeführt. Um einen Kompromiss zwischen wirtschaftlich sinnvollen Reaktionszeiten und einer zu möglichst wenig Nebenprodukten führenden Umsetzung zu erzielen, haben sich Temperaturen von 50 bis 220°C, insbesondere von 80°C bis 150°C als besonders vorteilhaft erwiesen. Da Schritt a) meist exotherm ist, wird er vorzugsweise unter Kühlung durchgeführt.

Die Schritte b) und c) der erfindungsgemäßen Verfahren werden bevorzugt bei Temperaturen von 0-250 °C, bevorzugt bei Temperaturen von 20 bis 150°C und besonders bevorzugt bei Temperaturen von 50 bis 100°C durchgeführt. Bevorzugt bleibt die Temperatur während der Schritte b) und c) innerhalb eines Temperaturrahmens von vorzugsweise 30°C, besonders bevorzugt von 20°C konstant. Da Schritt b) meist exotherm ist wird er vorzugsweise unter Kühlung durchgeführt.

Sämtliche Reaktionsschritte werden vorzugsweise unter Schutzgas, z.B. Stickstoff und Argon durchgeführt.

In einer bevorzugten Ausführungsform der Erfindung können die erfindungsgemäßen Verfahren auch noch einen oder mehrere der folgenden zusätzlichen Verfahrensschritte aufweisen:
a1) sofern das Amin der allgemeinen Formeln (2) bzw. (5) im Schritt a) im Überschuss eingesetzt wurde, kann dieser Überschuss noch vor der Zugabe der Base (B) in Schritt b) vollständig oder teilweise abgetrennt werden. Die Abtrennung erfolgt vorzugsweise destillativ. Diese Maßnahme dient vorzugsweise dazu, die Löslichkeit des bzw. der jeweiligen Salze in der organischen Phase zu verringern.
d) Zugabe eines oder mehrerer unpolarer Lösemittel (L) zur produkthaltigen Phase. Das zusätzliche Lösungsmittel (L) kann dabei vor, während oder nach den Verfahrensschritten a), a1) b) und c) zugesetzt werden. Diese Maßnahme dient vorzugsweise dazu, die Löslichkeit des bzw. der jeweiligen Salze in der organischen Phase zu verringern. Erfolgt die Zugabe des unpolaren Lösungsmittels nach dem Verfahrensschritt c), so werden die bei diesem Schritt ausgefällten Salze vorzugsweise in einem zusätzlichen Separationsschritt, z.B. einer Filtration abgetrennt. Die dabei abzutrennenden Salzmengen sind allerdings verglichen mit der ursprünglichen Salzmenge bei Schritt c) extrem gering, die Abtrennung ist entsprechend einfach. Erfolgt die Zugabe des unpolaren Lösungsmittels vor oder während des Schrittes c), so werden die jeweiligen Salze aus der Produktphase in die flüssige Phase, die im Wesentlichen aus dem Halogenid der Base (B) besteht, gedrängt und mit diesem gemeinsam abgetrennt.
e) Destillative Trennung bzw. Aufreinigung des Produkt (1) bzw. (4) sowie des bei Schritt a) gegebenenfalls im Überschuss eingesetzten sowie bei der Umsalzung in Schritt b) freigesetzten Amins (2) bzw. (5). Bei dieser fraktionieren Destillation wird das Amin der allgemeinen Formeln (2) bzw. (5) vorzugsweise direkt in hinreichend hoher Reinheit erhalten, so daß es ohne weitere Aufarbeitung im nächsten Reaktionscyclus wieder eingesetzt werden kann. Auch das Produkt der allgemeinen Formeln (1) bzw. (4) wird bei der entsprechenden Destillation vorzugsweise direkt in hinreichender Reinheit erhalten. Sofern bei der Phasentrennung in Schritt Halogenide der Base (B) in der organischen Phase verbleiben, werden diese ebenfalls bevorzugt destillativ abgetrennt. Dasselbe gilt für das gegebenenfalls in Schritt d) zusätzlich zugegebenen Lösungsmittels (L).
   Dabei ist es möglich, daß alle Komponenten, insbesondere Produkt der allgemeinen Formeln (1) bzw. (4), Amin der allgemeinen Formeln (2) bzw. (5) sowie gegebenenfalls die Base (B) sowie das Lösungsmittel (L) durch eine einzige fraktionierte Destillation voneinander getrennt werden. Ebenso kann dies durch mehrere separate Destillationsschritte erfolgen. So kann z.B. zunächst nur das Amin der allgemeinen Formeln (2) bzw. (5) destillativ entfernt werden, wobei das Rohprodukt zunächst im Destillationssumpf verbleibt und anschließend in einem separaten Destillations- oder Dünnschichterschritt aufgereinigt wird.
f) Zusätzliche Zugabe von Ammoniak zur produkthaltigen Phase nach der Phasentrennung in Schritt c) und Abtrennung des entstandenen Ammoniumhalogenids. Diese Maßnahme kann insbesondere zur Verringerung des Halogenidgehaltes im Endprodukt geeignet sein.
g) Zusätzliche Zugabe von Alkalimetallalkoholaten, vorzugsweise Natrium- oder Kaliumalkoholate, zur produkthaltigen Phase nach der Phasentrennung in Schritt c) und Abtrennung der entstandenen Alkalimetallhalogenide. Diese Maßnahme kann insbesondere zur Verringerung des Halogenidgehaltes im Endprodukt geeignet sein.
h) Zusätzliche Zugabe polymerer Polyamine zur produkthaltigen Phase nach der Phasentrennung in Schritt c). Diese Maßnahme kann dazu dienen, eventuelle Reste ionischer Halogenide zu binden, so daß diese bei einer abschließenden Destillation des Produktes der allgemeinen Formeln (1) bzw. (4) (siehe Schritt e) weitgehend im Destillationssumpf zurückbleiben und ein entsprechend halogenidarmes Produkt erhalten wird.
i) Rückgewinnung bzw. Recyclierung des bei Schritt a) gegebenenfalls im Überschuss eingesetzten sowie des bei Schritt b) freigesetzten Amins der allgemeinen Formeln (2) bzw. (5). Sofern das Amin der allgemeinen Formeln (2) bzw. (5) ganz oder zumindest in Teilen nicht durch eine einfache Destillation - vgl. Schritt e) - in hinreichender Sauberkeit erhalten werden kann, können die störenden Produkte, Nebenprodukte oder auch Reste der in Schritt b) zugesetzten Base (B) durch einen oder mehrere weitere Reinigungsschritte abgetrennt werden. Beispielhaft zu nennen wäre hier
   - weitere destillative Reinigungsschritte der nach der ersten Destillation (Schritt e)) noch nicht hinreichend sauberen Aminfraktionen
   - Zusätzliche Zugabe von aliphatischen Ketonen oder Aldehyden zur produkthaltigen Phase nach Schritt c) oder aber zu den unter Schritt e) destillierten Aminfraktionen. Diese Maßnahme kann - sofern es sich bei der in Schritt b) zugegebenen Base (B) um Verbindungen mit primären Aminogruppen handelt - dazu dienen, in diesen Phasen noch enthaltene Reste der Base (B) in die entsprechenden Imine zu überführen. Letztere lassen sich oftmals destillativ leichter von den Produkten und vor allem von den überschüssig eingesetzten und/oder bei Schritt b) wieder freigesetzten Aminen der allgemeinen Formeln (2)bzw. (5) abtrennen als die Base (B) selbst.
l) Rückgewinnung der in Schritt b) eingesetzten Base (B) vorzugsweise durch Umsalzung des gebildeten Halogenids dieser Base mit starken Basen, z.B. Alkali- oder Erdalkalihydroxide, -carbonate, hHydrogencarbonate etc. Dabei können die jeweiligen Basen in Substanz oder auch in wässriger oder nicht-wässriger Lösung oder Suspension eingesetzt werden. Werden wässrige Lösungen eingesetzt und/oder Wasser bei der Umsetzung freigesetzt, so wird dieses bevorzugt destillativ von der Base (B) abgetrennt. Wurde dabei Ethylendiamin als Base (B) eingesetzt, so erfolgt diese destillative Trennung vorzugsweise bei so hohem Druck, daß Ethylendiamin und Wasser kein Azeotrop mehr bilden.

Handelt es sich bei der Base (B) um eine Verbindung, z.B. um ein Amin, das selbst reaktiv gegenüber dem Silan der allgemeinen Formeln (3) bzw. (6) ist, so wird das Amin der allgemeinen Formeln (2) bzw. (5) durch die genannten Verfahrensschritten vorzugsweise soweit aufgereinigt, daß der Gehalt der Base (B) in den Aminen der allgemeinen Formeln (2) bzw. (5) unter 3%, bevorzugt unter 1% und besonders unter 0,5% liegt.

Bei einer besonders bevorzugten Kombination der beschriebenen Varianten des erfindungsgemäßen Verfahrens wird das Amin der allgemeinen Formeln (2) bzw. (5) im Überschuss eingesetzt, wobei das überschüssige Amin zunächst durch einen Schritt a1) destillativ weitgehend oder zumindest in Teilen entfernt wird. Anschließend wird gegebenenfalls ein Lösungsmittel (L) (Schritt d)) sowie die Base (B) zugesetzt (Schritt b)) und die Salzphase abgetrennt (Schritt c)). Anschließend werden - sofern vorhanden - das Lösungsmittel (L) sowie das bei Schritt b) freigesetzte Amin der allgemeinen Formeln (2) bzw. (5) destillativ entfernt (Schritt e)). Dabei werden sowohl das Lösungsmittel (L) als auch beide Destillate des Amins der allgemeinen Formeln (2) bzw. (5) vorzugsweise mit so hoher Reinheit erhalten, daß sie ohne weitere Aufreinigung direkt wieder eingesetzt werden.

Bei einer weiteren besonders bevorzugten Variante wird bei Schritt d) ein Lösungsmittel (L) eingesetzt, dessen Siedepunkt unter demjenigen des Amins der allgemeinen Formeln (2) bzw. (5) aber oberhalb des Siedepunktes der Base (B) liegt, so dass eventuell vorhandene Reste der Base (B) in der organischen Phase gemeinsam mit dem Lösungsmittel (L) entfernt werden und anschließend destillativ ein Amin der allgemeinen Formeln (2) bzw. (5) erhalten werden kann (Schritt e)), daß über den bevorzugten niedrigen Gehalt der Base (B) enthält.

Selbstverständlich kann das Verfahren sowohl diskontinuierlich, z.B. in Rührkesseln, als auch kontinuierlich durchgeführt werden. Letzteres z.B. indem die Schritte a), b) sowie gegebenenfalls weitere Schritte (siehe oben) in einem Röhrenreaktor oder auch einer Rührgefäßkaskade erfolgen. Die einzelnen Substanzen werden dabei gemeinsam oder aber - bevorzugt - nacheinander eindosiert und eingemischt. Auch für die darauffolgende kontinuierliche Phasentrennung (Schritt c) sind geeignete Verfahren, z.B. unter Einsatz von Ruhe- bzw. Absetzgefäßen, Dekantern etc., bekannt und in der Literatur vielfach beschrieben.

Vorzugsweise beträgt der Wassergehalt der einzusetzenden Amine der allgemeinen Formeln (2) und (5) 0 bis 20000 ppm, bevorzugt 0 bis 5000 ppm, besonders bevorzugt 0 bis 1000 ppm.

Der pK_{b}-Wert der einzusetzenden Amine der allgemeinen Formeln (2) und (5) ist vorzugsweise größer als der der Base (B), bevorzugt mindestens 1 pK_{b}-Einheit größer, besonders bevorzugt 2 pK_{b}-Einheiten größer.

In einer bevorzugten Ausführungsform werden als Base (B) Verbindungen gewählt, deren Siedepunkt sich sowohl vom Produkt (1) bzw. (4) als auch vom Amin der allgemeinen Formeln (2) bzw. (5) um mindestens 40 °C vorzugsweise um mindestens 60 °C und besonders bevorzugt mindestens 90 °C unterscheidet, so daß sich Reste der Base (B), die bei der Phasentrennung in Schritt c) in der organischen Phase verbleiben, destillativ hinreichend gut sowohl vom Produkt der allgemeinen Formeln (1) bzw. (4) als auch von dem Amin der allgemeinen Formeln (2) bzw. (5) abtrennen lassen.

Als Base (B) werden bevorzugt Ethylen- oder Propylendiamineinheiten enthaltende Oligoamine (O) eingesetzt. Vorzugsweise enthalten die Oligoamine (O) 1 bis 20, insbesondere 1 bis 10 Ethylen- oder Propylendiamineinheiten. Bevorzugte Oligoamine (O) sind Ethylendiamin, Diethylentriamin, Diazabicyclooctan, Pentamethyldiethylentriamin, Propylendiamin, N4-Amin (BASF AG).

Besonders bevorzugt wird Ethylendiamin als Base (B) eingesetzt. So zeigt Ethylendiamin in dem erfindungsgemäßen Verfahren die folgende überraschende Eigenschaftskombination:
- Die Zugabe von Ethylendiamin führt in Schritt b) bereits dann zu einer weitgehend vollständigen Umsalzung, wenn nur die besonders bevorzugte Ethylendiaminmenge von 0,8 bis 2 Äquivalenten bezogen auf die Menge des (Halogenorganyl)silan der allgemeinen Formeln (3) bzw. (6) zugegeben wird.
- Die durch die weitgehende Umsalzung erhaltene Salzphase weist einen Schmelzpunkt von ca. 80 °C auf.
- Die flüssige Salzphase separiert sich bereits nach wenigen Minuten vollständig von der organischen Phase und kann somit ohne großen und damit kostenintensiven Zeitbedarf für eine Phasentrennung abgetrennt werden.

Mit den erfindungsgemäßen Verfahren können in einfacher Weise Aminoorganyl-triorganylsilane der allgemeinen Formel (1) und cyclische Aminosilane der allgemeinen Formel (4) in guten bis sehr guten Ausbeuten erhalten werden. Die Verfahren lassen sich großtechnisch einfach und gefahrlos umsetzen.

Die Reinheit der erfindungsgemäß hergestellten Aminoorganyl-triorganylsilane der allgemeinen Formel (1) und cyclischen Aminosilane der allgemeinen Formel (4) beträgt vorzugsweise mindestens 85%, besonders bevorzugt mindestens 95%.

Diese Reinheit lässt sich mittels eines optionalen nachgelagerten Destillationsschrittes e) des Produkts auf über 95% steigern.

Das erfindungsgemäße Verfahren bietet gegenüber dem Stand der Technik den Vorteil, dass der Hauptanteil der als Nebenprodukt entstehenden Ammoniumsalze der Amine der allgemeinen Formeln (2) bzw. (5) nicht mehr als Feststoff abgetrennt werden müssen, was im technischen Maßstab insbesondere im Falle von schlecht kristallisierenden Ammoniumsalzen (z.B. den Ammoniumsalzen des Anilins) meist aufwendig und teuer ist. Zudem verfügen viele sogenannte Multi-Purpose-Anlagen nicht über hinreichend leistungsfähige Anlagenelemente (z.B. Zentrifugen) zum Abtrennen von derart großen Feststoffmengen. Durch die Umsalzung können nun einfach zwei Flüssigphasen voneinander getrennt werden. Zudem werden Waschschritte des Filterkuchens mit zusätzlich einzusetzendem Lösungsmittel unnötig. Gleichzeitig kann durch den Einsatz optimierter Überschüsse an Amin gemäß der allgemeinen Formeln (2) und (5) die Bildung von Nebenprodukten signifikant reduziert werden. Zudem ist bemerkenswert, daß das erfindungsgemäße Verfahren geeignet ist, die oftmals vergleichsweise kostenintensiven Amine der Formeln (2) und (5), die bei Schritt a) für die Bildung der entsprechenden Ammoniumsalze verbraucht werden würden, durch die Umsalzung mit den in der Regel relativ preiswerten Base (B), z.B. Ethylendiamin, zurückzugewinnen und dadurch einer Wiederverwertung zugänglich zu machen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen und alle Drücke auf 0,10 MPa (abs.).

### Ausführungsbeispiele

### Beispiel 1

### Herstellung von 4-(Triethoxysilylmethyl)-tetrahydro-1,4-oxazin

In einem 500 ml-Vierhalskolben mit Rückflusskühler, KPG-Rührer, Thermometer wurden 82 g trockenes Morpholin (pK_{b} 5,67) auf 120°C erhitzt und innerhalb von 180 min unter Rühren mit 80 g Chlormethyl-triethoxysilan versetzt. Nach Beendigung der Zugabe wurde die Temperatur auf 105°C abgesenkt und es wurden innerhalb von 10 min unter Rühren 56,6 g Ethylendiamin (pK_{b} 4,07) zur Mischung gegeben, wobei Phasentrennung auftrat. Bei gleichbleibender Temperatur wurde 30 min nachgerührt und daraufhin die schwerere Ethylendiaminhydrochloridphase abgetrennt. Die obere Phase wurde fraktioniert destilliert. Es wurden 68 g (Ausbeute 68 %) 4-(Triethoxysilylmethyl)-tetrahydro-1,4-oxazinerhalten, dessen Reinheit mit Gaschromatographie zu 98,4% bestimmt wurde.

### Beispiel 2

### Herstellung von 4-(Triethoxysilylmethyl)-tetrahydro-1,4-oxazin

In einem 500 ml-Vierhalskolben mit Rückflusskühler, KPG-Rührer, Thermometer wurden 82 g trockenes Morpholin (pKb 5,67) auf 120°C erhitzt und innerhalb von 180 min unter Rühren mit 80 g Chlormethyl-triethoxysilan versetzt. Nach Beendigung der Zugabe wurde die Temperatur auf 105°C abgesenkt und es wurden innerhalb von 10 min unter Rühren 226,6 g Ethylendiamin (pKb 4,07) zur Mischung gegeben, wobei Phasentrennung auftrat. Bei gleichbleibender Temperatur wurde 30 min nachgerührt und daraufhin die schwerere Ethylendiaminhydrochloridphase abgetrennt. Die obere Phase wurde ohne Destillationskolonne fraktioniert destilliert. Es wurden 37 g (45% Rückgewinnung) Morpholin mit einer Reinheit von 89,7% und 73,5 g (Ausbeute 74,2%) 4-(Triethoxysilylmethyl)-tetrahydro-1,4-oxazin erhalten, dessen Reinheit zu 97,3% bestimmt wurde.

### Beispiel 3

### Recyclierung eines bei der Umsalzung freigesetzten Amins

Beim Vorgehen entsprechend des Beispiels 2 wird bei der Umsalzung Morpholin freigesetzt, welches bei der finalen fraktionierten Destillation als eigene Fraktion abgetrennt werden kann. Die dabei erhaltene Morpholinfraktion enthält laut gaschromatographier Analyse 0,9 % Ethylendiamin und 0,45 % Tetraethylsilikat. Bezogen auf den Ethylendiamingehalt werden dem Morpholin 4 Moläquivalente Methylethylketon und 1 Moläquivalent zusätzliches Tetraethylsilikat zugegeben. Nach erneuter Destillation wird Morpholin mit einer Reinheit von 98,9% und mit einem Ethylendiamingehalt von 0,06% erhalten.

### Beispiel 4

### Herstellung von N-Phenylaminomethyltriethoxysilan

In einem 500 ml-Vierhalskolben mit Rückflusskühler, KPG-Rührer, Thermometer wurden 65,7 g trockenes Anilin (pK_{b} 9,4) auf 120°C erhitzt und innerhalb von 180 min unter Rühren mit 60 g Chlormethyl-triethoxysilan versetzt und 60 min nachgerührt. Danach wurde die Temperatur auf 105°C abgesenkt und es wurden innerhalb von 10 min unter Rühren 42,4 g Ethylendiamin (pK_{b} 4,07) zur Mischung gegeben, wobei Phasentrennung auftrat. Bei gleichbleibender Temperatur wurde 30 min weiter gerührt, dabei auf 70°C gekühlt und daraufhin die schwerere Ethylendiaminhydrochloridphase abgetrennt. Die obere Phase wurde ohne Destillationskolonne fraktioniert destilliert. Es wurden 18,3 g Anilin mit einer Reinheit von 84,8%, 14,4 g Anilin mit einer Reinheit von 97,8% (45% Rückgewinnung) und 47,8 g (Ausbeute 62,9%) N-Phenylaminomethyltriethoxysilan erhalten, dessen Reinheit zu 88,9% bestimmt wurde. Der Chloridwert des Produkts betrug 88 ppm.

### Beispiel 5

### Herstellung von N-Phenylaminomethyltriethoxysilan

In einem 1000 ml-Vierhalskolben mit Rückflusskühler, KPG-Rührer, Thermometer wurden 602 g trockenes Anilin (pKb 9,4) auf 120°C erhitzt und innerhalb von 180 min unter Rühren mit 200 g (Chlormethyl)triethoxysilan versetzt und 60 min nachgerührt. Danach wurde die Temperatur auf 105°C abgesenkt und es wurden innerhalb von 10 min unter Rühren 109 g Ethylendiamin (pK_{b} 4,07) zur Mischung gegeben, wobei Phasentrennung auftrat. Bei gleichbleibender Temperatur wurde 30 min weiter gerührt, wobei auf 70°C gekühlt und daraufhin die schwerere Ethylendiaminhydrochloridphase abgetrennt wurde. Die obere Phase wird mit 27 g Lupasol G20 wasserfrei (BASF AG) versetzt und wie in Beispiel 4 beschrieben destilliert. Es werden 200 g N-Phenylaminomethyltriethoxysilan (73,2 % Ausbeute) mit einer Reinheit von 94,9% erhalten. Der Chloridwert betrug 8 ppm.

### Beispiel 6:

### Herstellung von N-Phenylaminomethyltrimethoxysilan

In einem 4L-Vierhalskolben mit Bodenventil, KPG-Rührer, Rückflusskühler, Tropftrichter und Thermometer wurden unter Schutzgas (Argon) 2179,3 g Anilin (pKb 9, 4) vorgelegt und unter Rühren auf ca. 120°C erhitzt. Anschließend wurden innerhalb von ca. 1,5 h 800,38 g Chlormethyl-trimethoxysilan zudosiert, wobei ein weißer Feststoff ausfiel. Dabei wurde die Temperatur bei 120-130°C gehalten. Nach zweistündigen Nachrühren bei gleicher Temperatur wurde die Reaktionsmischung auf ca. 90°C abgekühlt und es wurden 337,52 g Ethylendiamin (pKb 4,07) innerhalb von 30-45 min zudosiert. Im Laufe einer leicht exothermen Reaktion löste sich der Feststoff auf und es bildet sich ein emulgiertes Zweiphasensystem, welches noch für 15 min bei 90°C nachgerührt wird.

Nach dem Abstellen der Rührung separierten sich die Phasen innerhalb von ca. 10 min vollständig. Daraufhin wurde die untere Salzphase (Ethylendiaminhydrochlorid) bei 90 °C durch das Bodenventil abgelassen.

Aus der verbleibenden Lösung wurde das Anilin bei einem Druck von 20 mbar über eine 30 cm Vigreux-Kolonne in 2 Fraktionen abdestilliert, wobei im Sumpf erneut ein weißer Feststoff ausfiel. Es wurden wiederum 31,8 g Ethylendiamin zugetropft, wobei sich erneut eine flüssige Salzphase bildete, die im flüssigen Zustand abgetrennt wurde.

Das Rohprodukt wurde mit 11,13g Lupasol G20 wasserfrei (BASF AG) versetzt. Anschließend wurde das Produkt bei 1 mbar über eine 30 cm Vigreux-Kolonne feindestilliert, wobei 765,5 g *N-*Phenylaminomethyltrimethoxysilan (71,8% Ausbeute) mit einer Reinheit von 97,6% erhalten wurden. Der Chloridgehalt im Produkt lag bei 11 ppm.

### Beispiel 7:

### Herstellung von N-Phenylaminomethyltrimethoxysilan

In einem 4L-Vierhalskolben mit Bodenventil, KPG-Rührer, Rückflusskühler, Tropftrichter und Thermometer wurden unter Schutzgas (Argon) 2179,3 g Anilin (pKb 9,4) vorgelegt und unter Rühren auf ca. 120°C erhitzt. Anschließend wurden innerhalb von ca. 1,5 h 800,38 g Chlormethyl-trimethoxysilan zudosiert, wobei ein weißer Feststoff ausfiel. Dabei wurde die Temperatur bei 120-130°C gehalten. Nach zweistündigem Nachrühren bei gleicher Temperatur wurde die Reaktionsmischung auf ca. 110°C abgekühlt. Bei dieser Temperatur und einem Druck von 20 mbar wurden 1140 g Anilin abdestilliert. Die Suspension blieb dabei gut rührbar. Die Reinheit des abdestillierten Anilins betrug ca. 98%, es kann ohne weitere Aufreinigung in einem weiteren Synthesecyclus eingesetzt werden.

Anschließend werden 580 g Xylol (technische Mischung) zugegeben. Die Suspension kühlt dabei auf Temperaturen von ca. 80°C ab. Anschließend wurden 337,52 g Ethylendiamin (pKb 4,07) innerhalb von 15 min zudosiert. Im Laufe einer leicht exothermen Reaktion (Erwärmung der Reaktionsmischung auf ca. 100 °C) löste sich der Feststoff auf und es bildet sich ein emulgiertes Zweiphasensystem, welches noch für 15 min bei 90°C nachgerührt wird.

Nach dem Abstellen der Rührung separierten sich die Phasen innerhalb von ca. 10 min vollständig. Daraufhin wurde die untere Salzphase (Ethylendiaminhydrochlorid) bei 90 °C durch das Bodenventil abgelassen.

Aus der verbleibenden Lösung wurden das Xylol bei einem Druck von ca. 30 mbar über eine 30 cm Vigreux-Kolonne andestilliert. Die resultierende Xylolfraktion (ca. 600 g) enthielt neben Xylol (ca. 82%) auch noch Anilin (ca. 10%) und Etylendiaminreste (ca. 4%). Dieses Xylol kann trotz der Verunreinigungen ohne weitere Aufarbeitung beim nächsten Synthesecyclus wieder eingesetzt werden.

Anschließend wurde das Anilin bei einem Druck von 20 mbar über eine 30 cm Vigreux-Kolonne in 2 Fraktionen abdestilliert. Dabei wurden ca. 380 g Anilin mit einer Reinheit > 98% erhalten, die weniger als 0,1% Ethylendiamin enthalten und ebenso wie die erste Anilinfraktion ohne weitere Aufarbeitung in einem weiteren Synthesecyclus eingesetzt werden können.

Das erhaltene Rohprodukt wurde mit 11,13g Lupasol G20 wasserfrei (BASF AG) versetzt. Anschließend wurde das Produkt bei 1 mbar über eine 30 cm Vigreux-Kolonne feindestilliert, wobei 830 g *N*-Phenylaminomethyltrimethoxysilan (77,8% Ausbeute) mit einer Reinheit von 97,5% erhalten wurden. Der Chloridgehalt im Produkt lag bei 14 ppm.

### Beispiel 7

### Herstellung von N-((3-Aminopropyl)-dimethylsilyl)-2,2-dimethyl-1-aza-2-silacyclopentan

Die chemische Synthese von N-((3-Aminopropyl)-dimethylsilyl)-2,2-dimethyl-1-aza-2-silacyclopentan - d.h. Schritt a) des erfindungsgemäßen Verfahrens - wurde im Autoklaven wie in DE 100 49 183 Beispiel 1 Absatz [0020] beschrieben durchgeführt, wobei das als Edukt eingesetzte 3-Chlorpropyldimethylchlorsilan mit Ammoniak (pK_{b} 4,77) weitgehend quantitativ zu dem gewünschen Produkt umgesetzt wurde. Der einzige Unterschied zu dem in dem o.g. Absatz beschriebenen Verfahren bestand darin, daß die erhaltene Suspension aus N-((3-Aminopropyl)-dimethylsilyl)-2,2-dimethyl-1-aza-2-silacyclopentan und Ammoniumhydrochlorid nicht mit Pentan sondern mit n-Heptan aufgenommen wurde.

Zur weiteren Aufarbeitung wurden die Suspensionen aus mehreren Autoklaven-Ansätzen vereinigt. Die vereinigte Suspension enthielt ca. 362,5 g (1,575 mol) Produkt, 337,85 g (6,316 mol) Ammoniumchlorid, und 1812,5 g n-Heptan. Sie wurde auf 90°C erwärmt. Bei dieser Temperatur wurden 378, 45 g (6,2970 mol) Ethylendiamin (pK_{b} 4,07) zudosiert. Dabei bildete sich nach einigen Minuten ein emulgiertes Zweiphasensystem, welches noch für 1 h bei 90°C nachgerührt wurde.

Nach dem Abstellen der Rührung separierten sich die Phasen innerhalb von ca. 10 min vollständig. Daraufhin wurde die schwerere Ethylendiaminhydrochloridphase abgetrennt. Die obere, organische Phase wurde in eine Apparatur mit kurzer Destillationsbrücke überführt, und das Lösemittel n-Heptan wurde bei Normaldruck destillativ entfernt. Anschließend wurde das Rohprodukt über eine 30 cm Vigreux-Kolonne im Vakuum feindestilliert. Es wurden 275 g N-((3-Aminopropyl)-dimethylsilyl)-2,2-dimethyl-1-aza-2-silacyclopentan mit einer Reinheit > 95% erhalten.

## Patentansprüche

1. Verfahren zur Herstellung von Aminoorganyl-triorganylsilanen der allgemeinen Formel (1)
R'₃₋ₙR¹ₙSi-R²-NR³R⁴ (1),
durch Umsetzung von cyclischen oder acyclischen Aminen der allgemeinen Formel (2),
H-NR³R⁴ (2)
mit (Halogenorganyl)silanen der allgemeinen Formel (3)
R'₃₋ₙR¹ₙSi-R²-X (3),
wobei
**R'** einen Acyloxyrest oder einen Alkoxyrest mit jeweils 1-10 C- Atomen,
**R¹** einen Kohlenwasserstoffrest mit 1-10 C-Atomen,
**R²** einen zweiwertigen Kohlenwasserstoffrest mit 1-10 C-Atomen,
**R³, R⁴** unabhängig voneinander Wasserstoff oder ein Kohlenwasserstoffrest mit 1-10 C-Atomen, wobei **R³, R⁴** auch miteinander verbunden sein können, und der resultierende Cyclus auch noch weitere Heteroatome, NH-Gruppen oder N**R^{2a}**- Gruppen enthalten kann,
**R^{2a}** einen zweiwertigen Kohlenwasserstoffrest mit 1-10 C-Atomen,
**n** eine Zahl gleich 0, 1, 2 oder 3 und
**X** Chlor, Brom oder Iod bedeuten,
wobei die Umsetzung die folgenden Schritte umfasst:
a) Umsetzung des (Halogenorganyl)silans der allgemeinen Formel (3) und des Amins der allgemeinen Formel (2) bei einer Temperatur von 0 bis 250°C, wobei neben dem Silan der allgemeinen Formel (1) als Nebenprodukt das Ammoniumhalogenid des Amins der allgemeinen Formel (2) gebildet wird,
b) Zugabe einer Base (B), wobei es zu einer vollständigen oder partiellen Umsalzung kommt, bei der das Amin der allgemeinen Formel (2) wieder freigesetzt wird und sich das Halogenid der Base (B) bildet, wobei das Halogenid der Base (B) bei Temperaturen von höchstens 200 °C flüssig ist und
c) Abtrennung des gebildeten flüssigen Halogenids der Base (B).

2. Verfahren nach Anspruch 1, bei dem maximal einer der Reste **R³** oder **R⁴** Wasserstoff ist.

3. Verfahren zur Herstellung von cyclischen Aminosilanen der allgemeinen Formel (4) 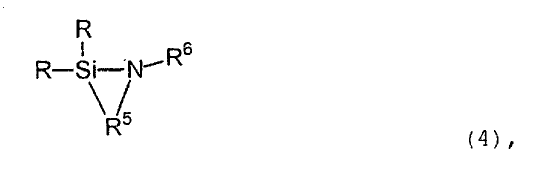 durch Umsetzung von Aminen der allgemeinen Formel (5),
H₂NR⁷ (5)
mit (Halogenorganyl)silanen der allgemeinen Formel (6)
(R₂)Y¹Si-R⁵-Y² (6),
wobei
**R⁵** einen zweiwertigen Kohlenwasserstoffrest mit 1-10 C-Atomen, bei dem die Kohlenwasserstoffkette durch Carbonylgruppen, Carboxylgruppen Sauerstoffatome, NH oder NR⁸-Gruppen unterbrochen sein kann,
**R⁶** Wasserstoff oder einen Kohlenwasserstoffrest mit 1-10 C- Atomen, der mit Halogenatomen, OH-Gruppen, und Gruppen -NH₂, -NHR⁸, NR⁸₂ substituiert sein kann,
**R⁷** Wasserstoff oder einen Kohlenwasserstoffrest mit 1-10 C- Atomen, der mit Halogenatomen, OH-Gruppen, und Gruppen -NH₂-, -NHR⁸, NR⁸₂ substituiert sein kann, **R** einen Kohlenwasserstoffrest, einen Acyloxyrest oder einen Alkoxyrest mit jeweils 1-10 C-Atomen,
**R⁸** einen Kohlenwasserstoffrest mit 1-10 C-Atomen, und
**Y¹** und **Y²** Chlor, Brom oder Iod bedeuten,
wobei die Umsetzung die folgenden Schritte umfasst:
a) Umsetzung des (Halogenorganyl)silans der allgemeinen Formel (6) und des Amins der allgemeinen Formel (5) bei einer Temperatur von 0 bis 300°C, wobei das Amin der allgemeinen Formel (5) mit einem 1,1- bis 1000-fachen Überschuss eingesetzt wird, und neben dem Silan der allgemeinen Formel (4) als Nebenprodukt das Ammoniumhalogenid des Amins der allgemeinen Formel (5) gebildet wird,
b) Zugabe einer Base (B), wobei es zu einer vollständigen oder partiellen Umsalzung kommt, bei der das Amin der allgemeinen Formel (5) wieder freigesetzt wird und sich das Halogenid der Base (B) bildet, wobei das Halogenid der Base (B) bei Temperaturen von höchstens 200 °C flüssig ist und
c) Abtrennung des gebildeten flüssigen Halogenids der Base (B).

4. Verfahren nach Anspruch 1 bis 3, bei dem **X**,
**Y¹** und **Y²** Chlor bedeuten.

5. Verfahren nach Anspruch 1 bis 4, bei dem als Base (B) Oligoamine (0) eingesetzt werden, die 1 bis 20 Ethylen- oder Propylendiamineinheiten aufweisen.

6. Verfahren nach Anspruch 1 bis 5, bei dem Ethylendiamin als Base (B) eingesetzt wird.

## Claims

1. Method for producing aminoorganyltriorganylsilanes of the general formula (1)
R'₃₋ₙR¹ₙSi-R²-NR³R⁴ (1),
by reacting cyclic or acyclic amines of the general formula (2),
H-NR³R⁴ (2)
with (haloorganyl)silanes of the general formula (3)
R'₃₋ₙR¹ₙSi-R²-X (3),
in which
**R'** is an acyloxy radical or an alkoxy radical having in each case 1-10 C atoms,
**R¹** is a hydrocarbon radical having 1-10 C atoms,
**R²** is a divalent hydrocarbon radical having 1-10 C atoms,
**R³, R⁴,** independently of one another, are hydrogen or a hydrocarbon radical having 1-10 C atoms, it also being possible for **R³, R⁴** to be linked to one another and for the resulting cycle also to contain further heteroatoms, NH groups or N**R^{2a}** groups,
**R^{2a}** is a divalent hydrocarbon radical having 1-10 C atoms,
**n** is a number equal to 0, 1, 2 or 3 and
**X** is chlorine, bromine or iodine,
the reaction comprising the following steps:
a) reaction of the (haloorganyl)silane of the general formula (3) and of the amine of the general formula (2) at a temperature of from 0 to 250°C, the ammonium halide of the amine of the general formula (2) being formed as a byproduct in addition to the silane of the general formula (1),
b) addition of a base (B), complete or partial double decomposition occurring in which the amine of the general formula (2) is liberated again and the halide of the base (B) forms, the halide of the base (B) being liquid at temperatures of not more than 200°C, and
c) removal of the resulting liquid halide of the base (B).

2. Method according to Claim 1, in which not more than one of the radicals **R³** and **R⁴** is hydrogen.

3. Method for producing cyclic aminosilanes of the general formula (4) 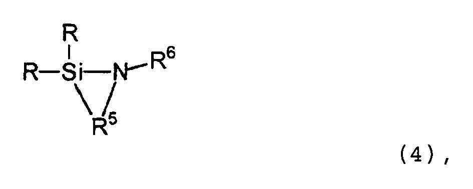 by reacting amines of the general formula (5),
H₂NR⁷ (5)
with (haloorganyl)silanes of the general formula (6)
(R₂)Y¹Si-R⁵-Y² (6),
in which
**R⁵** is a divalent hydrocarbon radical having 1-10 C atoms in which the hydrocarbon chain may be interrupted by carbonyl groups, carboxyl groups, oxygen atoms, NH or NR⁸ groups,
**R⁶** is hydrogen or a hydrocarbon radical having 1-10 C atoms which may be substituted by halogen atoms, OH groups and -NH₂ , -NHR⁸, NR⁸₂ groups,
**R⁷** is hydrogen or a hydrocarbon radical having 1-10 C atoms which may be substituted by halogen atoms, OH groups and -NH₂-, -NHR⁸, NR⁸₂ groups,
**R** is a hydrocarbon radical, an acyloxy radical or an alkoxy radical having in each case 1-10 C atoms,
**R⁸** is a hydrocarbon radical having 1-10 C atoms, and
**Y¹** and **Y²** are chlorine, bromine or iodine,
the reaction comprising the following steps:
a) reaction of the (haloorganyl)silane of the general formula (6) and of the amine of the general formula (5) at a temperature of from 0 to 300°C, the amine of the general formula (5) being used with a 1.1- to 1000-fold excess and the ammonium halide of the amine of the general formula (5) being formed as a byproduct in addition to the silane of the general formula (4),
b) addition of a base (B), complete or partial double decomposition occurring in which the amine of the general formula (5) is liberated again and the halide of the base (B) forms, the halide of the base (B) being liquid at temperatures of not more than 200°C, and
c) removal of the resulting liquid halide of the base (B).

4. Method according to Claims 1 to 3, in which **X**, **Y¹** and **Y²** are chlorine.

5. Method according to Claims 1 to 4, in which oligoamines (O) which have 1 to 20 ethylene- or propylenediamine units are used as base (B).

6. Method according to Claims 1 to 5, in which ethylenediamine is used as base (B).

## Revendications

1. Procédé pour la préparation d'amino-organyl-triorganylsilanes de formule générale (1)
R'₃₋ₙR¹ₙSi-R²-NR³R⁴ (1),
par mise en réaction d'amines cycliques ou acycliques de formule générale (2),
H-NR³R⁴ (2)
avec des (halogéno-organyl)silanes de formule générale (3)
R'₃₋ₙR¹ₙSi-R²-X (3),
où
**R'** représente un radical acyloxy ou un radical alcoxy ayant à chaque fois de 1 à 10 atomes de carbone,
**R¹** représente un radical hydrocarboné ayant de 1 à 10 atomes de carbone,
**R²** représente un radical hydrocarboné divalent ayant de 1 à 10 atomes de carbone,
**R³, R⁴** représentent, indépendamment l'un de l'autre, un atome d'hydrogène ou un radical hydrocarboné ayant de 1 à 10 atomes de carbone, **R³, R⁴** pouvant également être liés l'un à l'autre, et le cycle résultant pouvant également contenir encore d'autres hétéroatomes, des groupes NH ou des groupes N**R^{2a},**
**R^{2a}** représente un radical hydrocarboné divalent ayant de 1 à 10 atomes de carbone,
**n** représente un nombre valant 0, 1, 2 ou 3 et
**X** représente un atome de chlore, de brome ou d'iode ;
dans lequel la réaction comprend les étapes suivantes :
a) mise en réaction de l'(halogéno-organyl)silane de formule générale (3) et de l'amine de formule générale (2) à une température de 0 à 250°C, outre le silane de formule générale (1), l'halogénure d'ammonium de l'amine de formule générale (2) étant formé en tant que sous-produit,
b) addition d'une base (B), une trans-salification partielle ou totale se produisant, dans laquelle l'amine de formule générale (2) est à nouveau libérée et il se forme l'halogénure de la base (B), l'halogénure de la base (B) étant liquide à des températures d'au maximum 200°C et
c) séparation de l'halogénure liquide formé de la base (B).

2. Procédé selon la revendication 1, dans lequel au maximum l'un des radicaux **R³** ou **R⁴** est un atome d'hydrogène.

3. Procédé pour la préparation d'aminosilanes cycliques de formule générale (4) 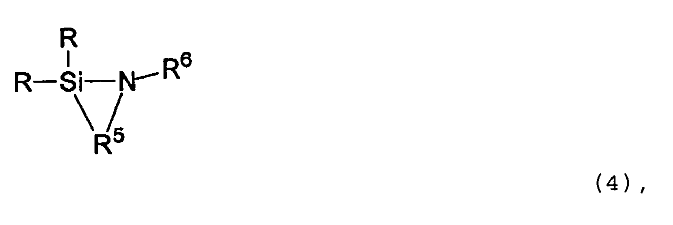 par mise en réaction d'amines de formule générale (5),
H₂NR⁷ (5)
avec des (halogéno-organyl)silanes de formule générale (6)
(R₂)Y¹Si-R⁵-Y² (6),
où
**R⁵** représente un radical hydrocarboné divalent ayant de 1 à 10 atomes de carbone, dans lequel la chaîne hydrocarbonée peut être interrompue par des groupes carbonyle, des groupes carboxyle, des atomes d'oxygène, des groupes NH ou NR⁸,
**R⁶** représente un atome d'hydrogène ou un radical hydrocarboné ayant de 1 à 10 atomes de carbone, qui peut être substitué par des atomes d'halogène, des groupes OH et des groupes -NH₂, -NHR⁸, NR⁸₂,
**R⁷** représente un atome d'hydrogène ou un radical hydrocarboné ayant de 1 à 10 atomes de carbone, qui peut être substitué par des atomes d'halogène, des groupes OH et des groupes -NH₂-, -NHR⁸, NR⁸₂,
**R** représente un radical hydrocarboné, un radical acyloxy ou un radical alcoxy ayant à chaque fois de 1 à 10 atomes de carbone,
**R⁸** représente un radical hydrocarboné ayant de 1 à 10 atomes de carbone, et
**Y¹** et **Y²** représentent un atome de chlore, de brome ou d'iode,
dans lequel la réaction comprend les étapes suivantes :
a) mise en réaction de l'(halogéno-organyl)silane de formule générale (6) et de l'amine de formule générale (5) à une température de 0 à 300 °C, l'amine de formule générale (5) étant utilisée en un excès de 1,1 à 1 000 fois, et outre le silane de formule générale (4), l'halogénure d'ammonium de l'amine de formule (5) étant formé en tant que sous-produit,
b) addition d'une base (B), une trans-salification partielle ou totale se produisant, dans laquelle l'amine de formule générale (5) est à nouveau libérée et il se forme l'halogénure de la base (B), l'halogénure de la base (B) étant liquide à des températures d'au maximum 200°C et
c) séparation de l'halogénure liquide formé de la base (B).

4. Procédé selon les revendications 1 à 3, dans lequel **X, Y¹** et **Y²** représentent un atome de chlore.

5. Procédé selon les revendications 1 à 4, dans lequel on utilise comme base (B) des oligoamines (O) qui comportent de 1 à 20 unités éthylène- ou propylènediamine.

6. Procédé selon les revendications 1 à 5, dans lequel on utilise comme base (B) l'éthylènediamine.
